# EUROPEAN PATENT APPLICATION

(11) **EP 4 650 241 A1**
(43) Date of publication of application: **19.11.2025**
(21) Application number: 23916138.3
(22) Date of filing: 14.11.2023
(51) Int. Cl.: B60W 50/12, G06F 21/31

(54) **USER AUTHENTICATION METHOD AND USER AUTHENTICATION SYSTEM**

(30) Priority: 12.01.2023 JP 2023003243
(71) Applicant: Panasonic Intellectual Property Management Co., Ltd., Kadoma-shi, Osaka 571-0057 (JP)
(72) Inventor: NAKAOKA, Hideaki, Kadoma-shi, Osaka 571-0057 (JP); HAGA, Tomoyuki, Kadoma-shi, Osaka 571-0057 (JP); UJIIE, Yoshihiro, Kadoma-shi, Osaka 571-0057 (JP); AOSHIMA, Hatsuho, Kadoma-shi, Osaka 571-0057 (JP); AKIMOTO, Shinya, Kadoma-shi, Osaka 571-0057 (JP)
(74) Representative: Grünecker Patent- und Rechtsanwälte PartG mbB
(86) International application number: PCT/JP2023/040900
(87) International publication number: WO 2024/150520

(57) **Abstract**

Provided is a user authentication method of authenticating a user in a vehicle (10). The user authentication method includes: authenticating a first user in the vehicle (10) at a first time point (S1); enabling a function of the vehicle (10) according to the first user authenticated (S2); determining whether a second user in the vehicle (10) at a second time point after the first time point and during travel of the vehicle (10) is a same person as the first user (S4); and performing a process regarding restriction of the function enabled, according to a result of the determining of whether the second user is the same person as the first user (S5, S6).

## Description

### [Technical Field]

The present disclosure relates to a user authentication method and a user authentication system.

### [Background Art]

Various studies for vehicle security have been conducted. For example, patent literature (PTL) 1 discloses a vehicle control system capable of providing improved measures against vehicle theft.

### [Citation List]

### [Patent Literature]

[PTL 1] Japanese Unexamined Patent Application Publication No. 2017-202708

### [Summary of Invention]

### [Technical Problem]

Now, vehicles are expected to be improved in security performance.

In view of this, the present disclosure provides a user authentication method and a user authentication system with improved security performance.

### [Solution to Problem]

A user authentication method according to an aspect of the present disclosure is a user authentication method of authenticating a user in a vehicle. The user authentication method includes: authenticating a first user in the vehicle at a first time point; enabling a function of the vehicle according to the first user authenticated; determining whether a second user in the vehicle at a second time point is a same person as the first user, the second time point being after the first time point and during travel of the vehicle; and performing a process regarding restriction of the function enabled, according to a result of the determining of whether the second user is the same person as the first user.

A user authentication system according to an aspect of the present disclosure is a user authentication system that authenticates a user in a vehicle. The user authentication system includes: an authenticator that authenticates a first user in the vehicle at a first time point; a first controller that enables a function of the vehicle according to the first user authenticated; a determiner that determines whether a second user in the vehicle at a second time point is a same person as the first user, the second time point being after the first time point and during travel of the vehicle; and a second controller that performs a process regarding restriction of the function enabled, according to a result of the determining of whether the second user is the same person as the first user.

### [Advantageous Effects of Invention]

An aspect of the present disclosure can achieve a user authentication method, etc. with improved security performance.

### [Brief Description of Drawings]

[FIG. 1]

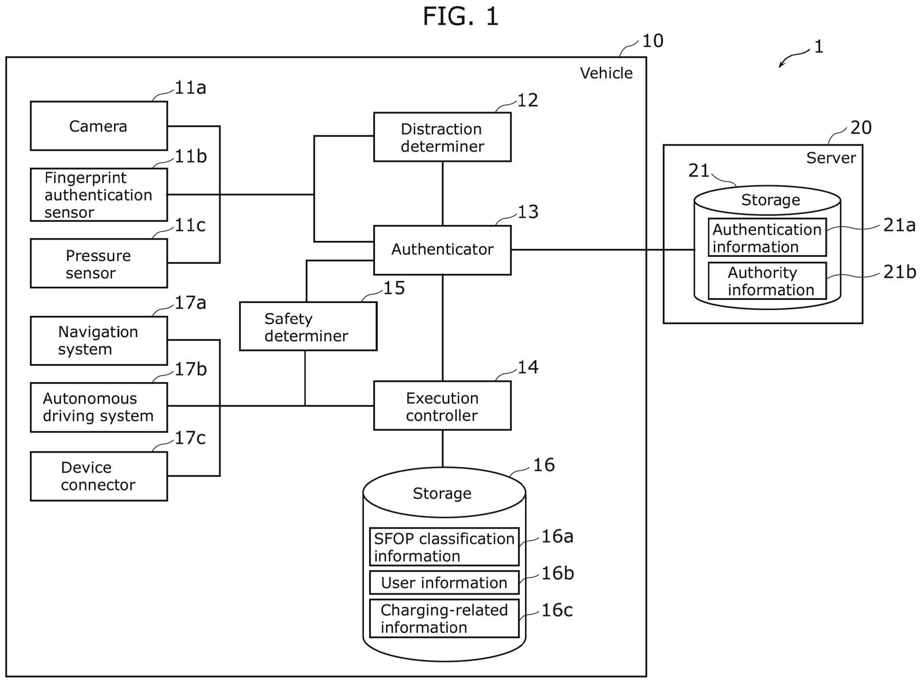

   FIG. 1 is a block diagram illustrating a functional configuration of a user authentication system according to an embodiment.
[FIG. 2]

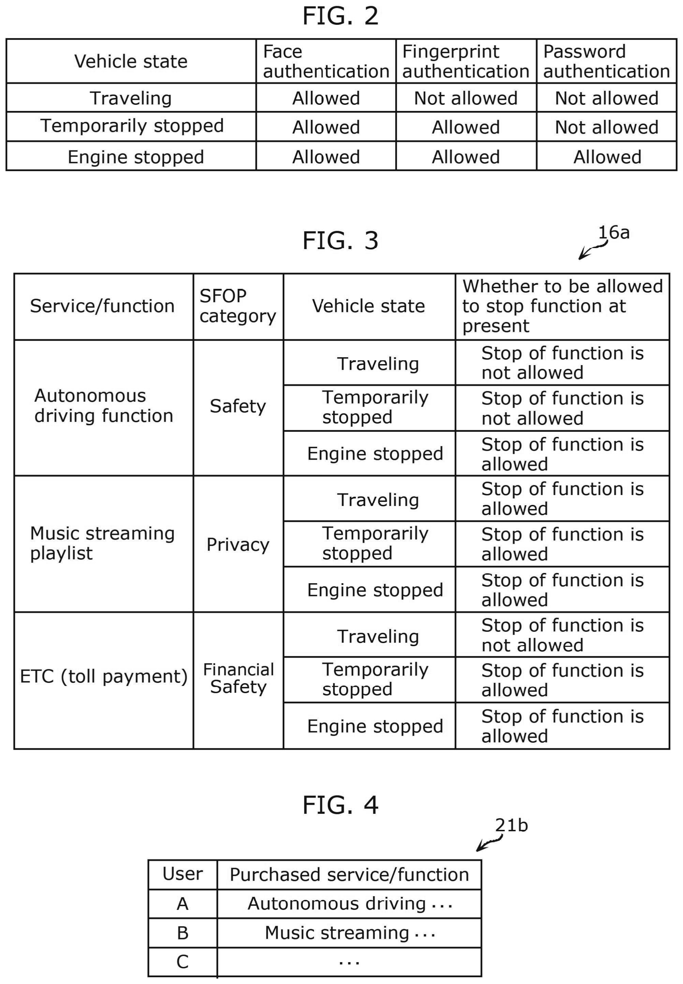

   FIG. 2 is a diagram illustrating a relationship between a vehicle state and a user authentication method according to the embodiment.
[FIG. 3]
   FIG. 3 is a diagram illustrating SFOP classification information according to the embodiment.
[FIG. 4]
   FIG. 4 is a diagram illustrating authority information according to the embodiment.
[FIG. 5]

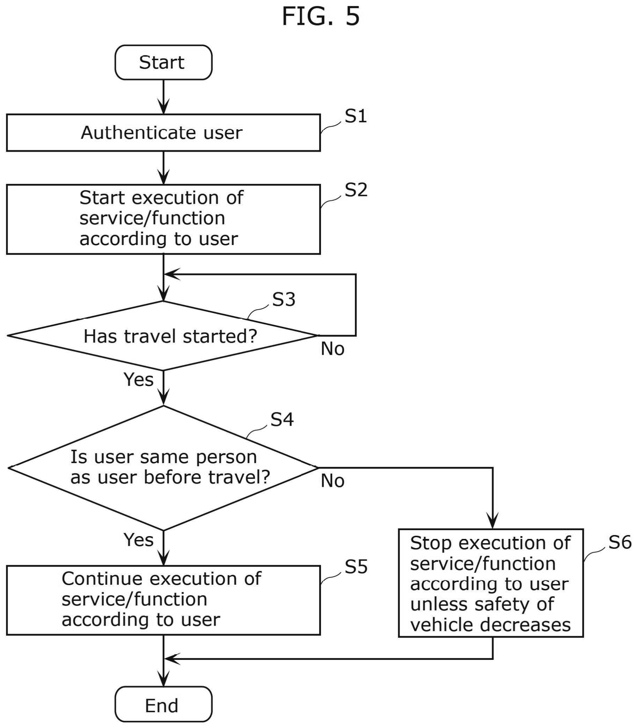

   FIG. 5 is a flowchart illustrating an outline of a user authentication method in a user authentication system according to the embodiment.
[FIG. 6A]

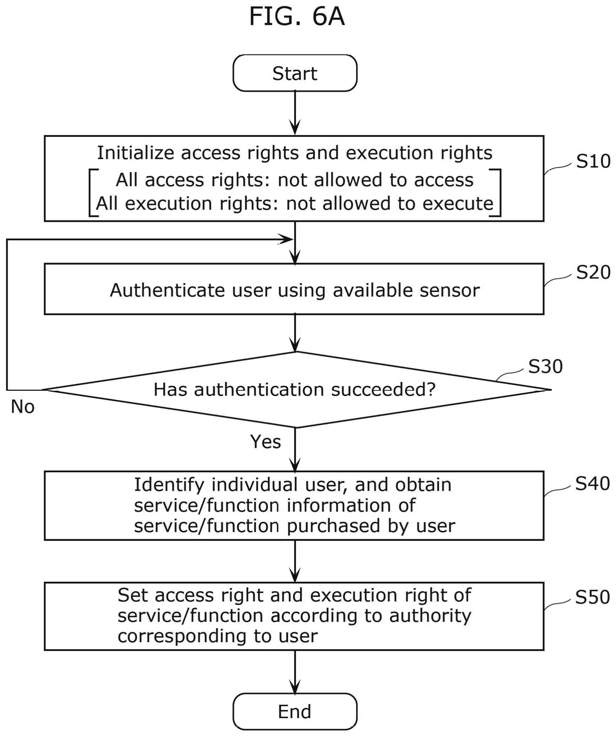

   FIG. 6A is a flowchart illustrating the user authentication method before travel of a vehicle in the user authentication system according to the embodiment.
[FIG. 6B]

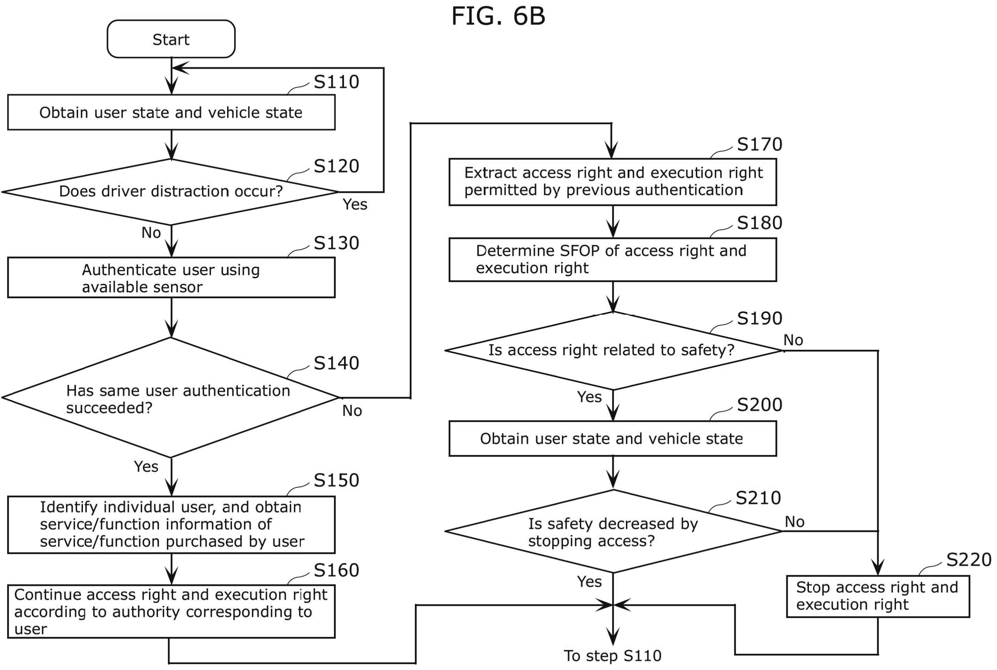

   FIG. 6B is a flowchart illustrating the user authentication method during travel of a vehicle in the user authentication system according to the embodiment.
[FIG. 7A]

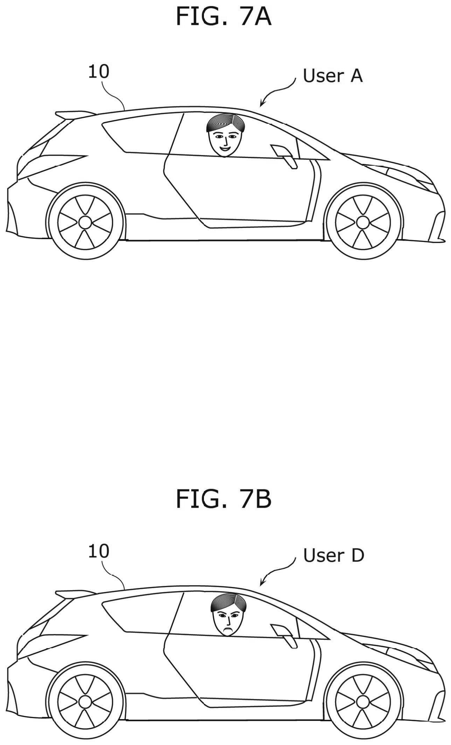

   FIG. 7A is a diagram schematically illustrating a case where a user at a second time point is the same person as a user at a first time point.
[FIG. 7B]
   FIG. 7B is a diagram schematically illustrating a case where a user at a second time point is not the same person as a user at a first time point.

### [Description of Embodiments]

### (Circumstances Leading to the Present Disclosure)

Prior to the description of an embodiment of the present disclosure, circumstances leading to the present disclosure is described.

It has been studied that a service purchased in advance by a user is provided during travel of a vehicle (e.g., a vehicle function to implement the service is enabled). In providing such a service, a user is authenticated through personal authentication after the user gets in a vehicle and before the vehicle travels (e.g., before driving), and during travel of the vehicle (e.g., while driving), it becomes possible to receive provision of the service purchased in advance by the user.

Here, in recent years, Zero Trust has attracted attention as new security measures. In Zero Trust, even for the access from the inside as well as the outside, nothing is trusted in performing the control.

Such security measures are expected to be also applied to vehicles. For example, when Zero Trust is applied to a vehicle, even for the access from the inside of the vehicle, nothing is trusted in performing the control. Accordingly, when Zero Trust is applied to a vehicle, in addition to personal authentication before travel of the vehicle, further personal authentication is expected to be performed during travel of the vehicle. However, the above-mentioned PTL 1 discloses no authentication that takes Zero Trust into consideration.

In view of this, the inventors of the present application have conducted studies of a user authentication method and a user authentication system with improved security performance, and conceived of the user authentication method and the user authentication system described below. The inventors of the present application further have conceived of a user authentication method and a user authentication system that can safely restrict a function when authentication has failed.

A user authentication method according to Aspect 1 of the present disclosure is a user authentication method of authenticating a user in a vehicle. The user authentication method includes: authenticating a first user in the vehicle at a first time point; enabling a function of the vehicle according to the first user authenticated; determining whether a second user in the vehicle at a second time point is a same person as the first user, the second time point being after the first time point and during travel of the vehicle; and performing a process regarding restriction of the function enabled, according to a result of the determining of whether the second user is the same person as the first user.

In this manner, whether the first user at the first time point is the same person as the second user at the second time point is determined, and thus, for example, it is possible to improve the security performance of the vehicle in comparison with the case where user authentication is performed only once. For example, when the vehicle is stolen or a valid function is changed by system hacking after the user authentication at the first time point, the user authentication method according to Aspect 1 of the present disclosure can restrict the function of the vehicle as needed.

Moreover, for example, a user authentication method according to Aspect 2 of the present disclosure is the user authentication method according to Aspect 1, in which when the result indicates that the second user is not the same person as the first user, the process regarding the restriction may include stopping the function enabled.

In this manner, when the second user is different from the first user, it is possible to restrict the use of the function according to the first user (e.g., purchased by the first user) by the second user. Accordingly, in terms of preventing abuse of the function according to the first user, the user authentication method can improve the security performance of the vehicle.

Moreover, for example, a user authentication method according to Aspect 3 of the present disclosure is the user authentication method according to Aspect 2, in which when the result indicates that the second user is not the same person as the first user, the process regarding the restriction may further include: determining whether the function enabled is a function related to safety during travel of the vehicle; and stopping the function enabled, when the function enabled is determined not to be a function related to the safety.

In this manner, even when the second user is different from the first user, the function related to the safety is kept valid, and thus it is possible to prevent a decrease in safety during travel of the vehicle.

Moreover, for example, a user authentication method according to Aspect 4 of the present disclosure is the user authentication method according to Aspect 3, in which when the function enabled is determined to be a function related to the safety, the process regarding the restriction may include stopping the function enabled, after a state of the vehicle changes to a safe state in which the function enabled can be stopped safely.

In this manner, the function according to the first user can be stopped after the vehicle is brought to a state in which the function can be stopped safely, and thus the user authentication method can achieve both the improvement in security performance of the vehicle and the safety during travel of the vehicle.

Moreover, for example, a user authentication method according to Aspect 5 of the present disclosure is the user authentication method according to Aspect 4, in which the state of the vehicle may include a traveling state, a temporarily stopped state, and an engine stopped state, and the safe state may be the engine stopped state.

In this manner, when the vehicle is in the traveling state or in the temporarily stopped state, the function related to the safety is not stopped. Accordingly, it is possible to effectively prevent a decrease in safety during travel of the vehicle.

Moreover, for example, a user authentication method according to Aspect 6 of the present disclosure is the user authentication method according to Aspect 3, in which when the function enabled is determined to be a function related to the safety, the process regarding the restriction may include: forcibly moving the vehicle to a location where the function enabled can be stopped safely; and stopping the function enabled, after the vehicle moves to the location.

This allows shortening the time of use of the function according to the first user by the second user. Accordingly, in terms of preventing abuse of the function, it is possible to more improve the security performance of the vehicle.

Moreover, for example, a user authentication method according to Aspect 7 of the present disclosure is the user authentication method according to any of Aspects 1 to 6. The user authentication method may further include: determining a state of the vehicle at the first time point, and determining an authentication method for the user at the first time point according to a result of the determining of the state of the vehicle at the first time point; and determining a state of the vehicle at the second time point, and determining an authentication method for the user at the second time point according to a result of the determining of the state of the vehicle at the second time point.

In this manner, it is possible to authenticate a user using an appropriate authentication method according to the current vehicle state at each of the first time point and the second time point.

Moreover, for example, a user authentication method according to Aspect 8 of the present disclosure is the user authentication method according to Aspect 7, in which the first time point is after the first user gets in the vehicle and before the vehicle travels, at the first time point, the user may be authenticated using an input-based authentication method that receives an input from the first user, or a contactless authentication method that uses a sensing result of the first user, and at the second time point, the user may be authenticated using the contactless authentication method between the input-based authentication method and the contactless authentication method.

In this manner, the authentication method in which driver distraction rarely occurs is used to authenticate a user during travel of the vehicle, and thus the user can focus on his/her driving. Accordingly, the user authentication method can improve the security performance of the vehicle without distracting the user who is driving.

Moreover, for example, a user authentication method according to Aspect 9 of the present disclosure is the user authentication method according to any of Aspects 1 to 8, in which the determining of whether the second user is the same person as the first user may be performed multiple times during travel of the vehicle.

In this manner, determining of whether the second user is the same person as the first user is performed multiple times, and thus it is possible to quickly detect that the second user different from the first user has gotten in the vehicle and stop the function. Accordingly, the security performance of the vehicle is further improved.

A user authentication system according to Aspect 10 of the present disclosure is a user authentication system that authenticates a user in a vehicle. The user authentication system includes: an authenticator that authenticates a first user in the vehicle at a first time point; a first controller that enables a function of the vehicle according to the first user authenticated; a determiner that determines whether a second user in the vehicle at a second time point is a same person as the first user, the second time point being after the first time point and during travel of the vehicle; and a second controller that performs a process regarding restriction of the function enabled, according to a result of the determining of whether the second user is the same person as the first user.

With this, the same effects as the above-mentioned user authentication method can be produced.

It is to be noted that these general and specific aspects may be implemented using a system, a method, an integrated circuit, a computer program, or a non-transitory computer readable recording medium such as a CD-ROM, or any combination of systems, methods, integrated circuits, computer programs, or recording media. The program may be stored in a recording medium in advance, or may be provided to a recording medium through a wide area communication network including the Internet.

The following describes an embodiment in details with reference to the Drawings.

The embodiment described below presents a general or specific example. The numerical values, constituent components, the arrangement and connection of the constituent components, steps, the order of steps, etc., described in the following embodiment are mere examples, and therefore are not intended to limit the present disclosure. Accordingly, among constituent components in the following embodiment, those not appearing in any of the independent claims are described as optional constituent components.

The figures are schematic diagrams and are not necessarily precise illustrations. Therefore, for example, the scales, and so on, in the figures do not necessarily match. Moreover, in the figures, substantially the same constituent components are given the same reference signs, and overlapping description is omitted or simplified.

Moreover, in the Description, numerical values and numerical ranges are expressions which not only indicate exact meanings but also mean substantially equivalent ranges such as a range including a several percent difference (or an approximately 10% difference).

### [Embodiment]

The following describes a user authentication system according to the present embodiment with reference to FIG. 1 to FIG. 7B.

### (1. Configuration of User Authentication System)

First, a configuration of a user authentication system according to the present embodiment is described with reference to FIG. 1. FIG. 1 is a block diagram illustrating a functional configuration of user authentication system 1 according to the present embodiment.

As illustrated in FIG. 1, user authentication system 1 includes vehicle 10 and server 20. Vehicle 10 and server 20 are communicably connected with each other.

Vehicle 10 is an example of a moving object in which a user gets, such as a car, a bus, or a train. In the present embodiment, vehicle 10 is a car, more specifically, an autonomous vehicle that can autonomously move. Vehicle 10 may be a full autonomous vehicle, or a vehicle switchable between autonomous driving and manual driving.

A user is a person who gets in vehicle 10, such as a driver. The user also has already purchased a service related to vehicle 10 in advance, and can receive provision of the purchased service during travel of the vehicle.

Vehicle 10 includes camera 11a, fingerprint authentication sensor 11b, pressure sensor 11c, distraction determiner 12, authenticator 13, execution controller 14, safety determiner 15, storage 16, navigation system 17a, autonomous driving system 17b, and device connector 17c.

Camera 11a and fingerprint authentication sensor 11b are sensors for authenticating a user.

Camera 11a is an example of a sensor for face authentication, and captures a user's face. Camera 11a can be used to authenticate a user in a contactless manner. Camera 11a may be able to obtain an iris. Camera 11a may be a sensor for iris authentication. For example, camera 11a may be integrated with a room mirror.

Fingerprint authentication sensor 11b is an example of a sensor for biometric authentication. By being touched by a user, fingerprint authentication sensor 11b scans the user's fingerprint. Fingerprint authentication sensor 11b requires a user's action such that a user touches fingerprint authentication sensor 11b.

It is to be noted that a sensor for authenticating a user is not limited to the above. Instead of camera 11a and fingerprint authentication sensor 11b or in addition to camera 11a and fingerprint authentication sensor 11b, vehicle 10 may include another sensor. Vehicle 10 may include, as the sensor for authenticating a user, a receiver (e.g., a tough sensor, button, etc.) that receives an input of password for password authentication, a microphone for voiceprint authentication, or the like.

As described above, there are multiple user authentication methods. In the present embodiment, an authentication method appropriate to a user authentication timing is selected. The face authentication, the voiceprint authentication, or the like is an example of a contactless authentication method that uses a sensing result of a user (an authentication method involving no user's action). The fingerprint authentication, the password authentication, or the like is an example of an input-based authentication method that receives an input from a user (an authentication method involving a user's action). The following describes an example in which the face authentication, the fingerprint authentication, and the password authentication are used as the user authentication method.

Pressure sensor 11c is a sensor that detects that a user gets in or off vehicle 10, and is for example disposed in a steering wheel or a seat of vehicle 10. It is to be noted that, instead of pressure sensor 11c or in addition to pressure sensor 11c, vehicle 10 may include an opening and closing sensor that detects opening and closing of a door, or the like.

Distraction determiner 12 determines whether a user is distracted (whether distraction is present) by an authentication operation during travel of vehicle 10 (e.g., while the user is driving). Distraction determiner 12 obtains, from a sensor, at least one of a user state or a vehicle 10 state in performing the authentication operation, and based on the at least one of the user state or the vehicle 10 state obtained, determines whether the user is distracted (whether driver distraction occurs).

The user state indicates an action that the user is doing, and includes a wiper control, a light control, etc. The user state can be obtained from, for example, an image captured by camera 11a. The vehicle 10 state is a travel state of vehicle 10, and includes a traveling state, a temporarily stopped state, and an engine stopped state. The vehicle 10 state can be obtained from speed information of vehicle 10, whether the engine has been stopped, the location of vehicle 10, etc. Moreover, the engine stopped state is an example of a safe state in which the enabled vehicle 10 function can be stopped safely, in vehicle 10 state.

Moreover, distraction determiner 12 determines an authentication method according to the vehicle 10 state. Distraction determiner 12 changes the authentication method depending on the vehicle 10 state. FIG. 2 is a diagram illustrating a relationship between the vehicle 10 state and the user authentication method according to the present embodiment. FIG. 2 indicates sensors available for each vehicle 10 state.

As shown in FIG. 2, the vehicle 10 state includes a traveling state, a temporarily stopped state, and an engine stopped state, and the authentication method includes face authentication, fingerprint authentication, and password authentication. During travel (e.g., while driving), the user is authenticated only using the face authentication. In the temporarily stopped state, the user is authenticated using the face authentication and the fingerprint authentication, and in the engine stopped state, the user is authenticated using the face authentication, the fingerprint authentication, and the password authentication.

The fingerprint authentication cannot be used as the user authentication during travel since the user needs to touch the fingerprint authentication device (fingerprint authentication sensor 11b) and the driver distraction occurs. Moreover, the password authentication cannot be used in the traveling state and in the temporarily stopped state since the user needs to enter the password and the driver distraction occurs for a certain period of time.

As described above, the user is authenticated using an authentication method in which the driver distraction more rarely occurs during travel than before travel, i.e., in which few user operation is required and less attention is attracted from the user.

Distraction determiner 12 determines an authentication method to be used in the current authentication based on the current vehicle 10 state and the relationship illustrated in FIG. 2. Information indicating the relationship illustrated in FIG. 2 is set in advance and stored in storage 16.

Authenticator 13 performs the user authentication by identifying an individual user based on the information obtained from the sensor. Authenticator 13 identifies which user in authentication information 21a stored in storage 21 of server 20 is the user in vehicle 10.

Authenticator 13 also obtains authority information 21b including a service/function purchased by the authenticated user. Authority information 21b is described later using FIG. 4.

Authenticator 13 also authenticates a user during travel of vehicle 10, and determines whether the user authenticated before travel of vehicle 10 is the same person as the user authenticated during travel of vehicle 10. Hereinafter, the authentication during travel is also referred to as re-authentication. That the users are determined to be the same in determining whether to be the same person is also referred to as that re-authentication has succeeded, and that the users are determined not to be the same in determining whether to be the same person is also referred to as that re-authentication has failed.

Execution controller 14 performs control for implementing the service/function purchased by the user authenticated by authenticator 13. When the authenticated user has subscribed to a navigation service, execution controller 14 controls navigation system 17a to execute the navigation in travel of vehicle 10. Moreover, when the authenticated user has subscribed to an autonomous driving service, execution controller 14 controls autonomous driving system 17b to execute the autonomous driving of vehicle 10. Moreover, when the authenticated user has subscribed to a device connectivity service, execution controller 14 controls device connector 17c to execute the device connectivity in vehicle 10.

It is to be noted that the device is for example an information terminal such as a smart phone, and the device connectivity means for example that a device included in vehicle 10 (e.g., in-vehicle display) and the information terminal communicate with each other to implement setting of navigation, music reproduction, etc. Device connector 17c may be for example a component for implementing in-vehicle infotainment (IVI).

Execution controller 14 also executes an access to information that the user authenticated by authenticator 13 is permitted to access (e.g., user information 16b or charging-related information 16c).

Moreover, when re-authentication has failed, execution controller 14 executes a process that restricts execution of the service/function determined by safety determiner 15.

Safety determiner 15 determines, based on SFOP classification, whether the service/function to be stopped when re-authentication has failed in authenticator 13 is a service/function related to safety during travel of vehicle 10. The SFOP classification indicates four categories: Safety, Financial, Operational, and Privacy. The SFOP classification is described later using FIG. 3.

Storage 16 is a storage device that stores a variety of information for authenticating a user in vehicle 10. Storage 16 is implemented by for example a semiconductor memory, but is not limited to this.

Storage 16 stores for example SFOP classification information 16a, user information 16b, and charging-related information 16c.

SFOP classification information 16a is information for use in determination by safety determiner 15, and includes information indicating which service/function corresponds to which SFOP classification. FIG. 3 is a diagram illustrating SFOP classification information 16a according to the present embodiment.

As illustrated in FIG. 3, SFOP classification information 16a is information in which a SFOP category is associated with each service/function, and includes a services/function, a SFOP category, a vehicle state, and whether to be allowed to stop the function at present.

User information 16b is information including user's personal information such as location information of user's home, an address book, or a music playlist, but is not limited to this. When the authenticated user is a user permitted to access user information 16b, execution controller 14 can access user information 16b.

Charging-related information 16c is information including the fee payment history of electronic toll collection system (ETC) or the like. When the authenticated user is a user permitted to access charging-related information 16c, execution controller 14 can access charging-related information 16c.

It is to be noted that whether the user is permitted to access the information can be obtained from authority information 21b.

Navigation system 17a, autonomous driving system 17b, and device connector 17c are components for implementing a service available to a user. The function such as navigation, autonomous driving, or device connectivity becomes available in vehicle 10 by a user making a contract with an automobile company or a service provider.

Navigation system 17a is a system that navigates to a destination by registering the destination or a route to the destination on a map, and outputs an image and audio containing information or the like that guides vehicle 10 including navigation system 17a, to output device (e.g., a display device, or an audio output device) included in vehicle 10. Navigation system 17a is made up of, for example, a camera that captures the vicinity of vehicle 10, an image processor that generates an image in which information obtained from a navigation device in vehicle 10 is superimposed on the image captured by the camera, and an output device. The navigation device has a function that receives global positioning system (GPS) waves emitted from the GPS satellite and calculates various parameters extracted from the GPS waves to identify the current location of my vehicle as my vehicle location.

Software for navigation is installed into vehicle 10 after a user purchases the navigation service, and when the user gets in vehicle 10 and the user authentication succeeds, the navigation function is enabled.

Autonomous driving system 17b is a system that autonomously drives vehicle 10, and is made up of various sensors that detect circumstances of vehicle 10, a control device that controls the autonomous travel of vehicle 10 by predicting dangerous events or the like from the detection results of the various sensors and determining the operation details for vehicle 10, and the like.

Software for autonomous driving is installed into vehicle 10 after a user purchases the autonomous driving service, and when the user gets in vehicle 10 and the user authentication succeeds, the autonomous driving function is enabled.

Device connector 17c causes a device included in vehicle 10 and a device such as a smartphone of a user to collaborate to implement the in-vehicle infotainment. The term "collaborate" may mean allowing one device to communicate with the other device, and further allowing one device to control the other device.

Software for device connectivity is installed into vehicle 10 after a user purchases the device connectivity service, and when the user gets in vehicle 10 and the user authentication succeeds, the device connectivity function is enabled.

It is to be noted that the term "enabled" means that execution controller 14 becomes able to control navigation system 17a, autonomous driving system 17b, and device connector 17c.

Server 20 is a server that performs a process in the user authentication, and includes, for example, storage 21 that stores authentication information 21a and authority information 21b. Storage 21 is implemented by for example a semiconductor memory, but is not limited to this.

Authentication information 21a includes information that can identify a user to be authenticated by authenticator 13. For example, for the face authentication, authentication information 21a may include information for authenticating a user's face (e.g., a face image of the user).

Authority information 21b includes, for each user, an authority regarding access to a variety of information and an authority regarding execution of the vehicle 10 function. The authority regarding access to a variety of information is an exemplary access right, and for example authority needed in reading information stored in storage 16. The authority regarding execution of the vehicle 10 function is an exemplary execution right, and authority for enabling the function included in vehicle 10 to receive provision of the service purchased by a user. FIG. 4 is a diagram illustrating authority information 21b according to the present embodiment.

As illustrated in FIG. 4, authority information 21b includes, for each user, the details of the service/function to which the user has subscribed. In the example of FIG. 4, user A has subscribed to the autonomous driving service, and user B has subscribed to the music streaming service. Moreover, authority information 21b may include, for each user, information indicating information that the user can access (e.g., user information 16b or charging-related information 16c in storage 16).

### (2. Operation of User Authentication System)

Subsequently, the operation of user authentication system 1 configured as described above is described with reference to FIG. 5 to FIG. 7B. FIG. 5 is a flowchart illustrating an outline of a user authentication method in user authentication system 1 according to the present embodiment.

As illustrated in FIG. 5, firstly, authenticator 13 authenticates a user in vehicle 10 before travel of vehicle 10 (e.g., before the user drives) (S1). Authenticator 13 authenticates the user using at least one of face authentication, fingerprint authentication, or password authentication. It is to be noted that an example of the first time point is before travel.

Next, execution controller 14 starts execution of the service/function according to the user authenticated by authenticator 13 (S2). For example, execution controller 14 enables the vehicle 10 function according to the service purchased by the user by controlling at least one of navigation system 17a, autonomous driving system 17b, or device connector 17c, and starts the execution of the service/function. In this manner, execution controller 14 serves as the first controller that enables the vehicle 10 function according to the authorized user.

Next, based on information from a speed sensor or the like, vehicle 10 determines whether travel has started (S3). When it is determined that travel has started (Yes in S3), the processing proceeds to Step S4. When it is determined that travel does not start (No in S3), the processing proceeds back to Step S3 and continues.

Next, authenticator 13 determines whether a user in traveling vehicle 10 is the same person as the user authenticated before travel (S4). Authenticator 13 performs re-authentication during travel of vehicle 10, and determines whether to be the same person based on the result of the re-authentication and the result of the authentication in Step S1. In this manner, authenticator 13 serves as a determiner. It is to be noted that an example of the second time point is during travel.

It is to be noted that the first time point and the second time point as described above are different time points between the time point when the user gets in vehicle 10 and the time point when vehicle 10 arrives at the destination.

Next, when the user is determined to be the same person as the user before travel (Yes in S4), execution controller 14 continues the execution of the service/function according to the user (S5). When the user is determined not to be the same person as the user before travel (No in S4), execution controller 14 stops the execution of the service/function according to the user authenticated in Step S1 unless safety of vehicle 10 decreases (S6). In other words, when re-authentication has failed and when safety of vehicle 10 decreases if the service/function according to the user authenticated in Step S1 is stopped, execution controller 14 continues the execution of the service/function according to the user authenticated in Step S1.

In this manner, execution controller 14 serves as the second controller that performs a process regarding restriction of the enabled function according to the result of determining whether to be the same person.

The following further describes the user authentication method before and after travel of vehicle 10 with reference to FIG. 6A and FIG. 6B. FIG. 6A is a flowchart illustrating the user authentication method before travel of vehicle 10 in user authentication system 1 according to the present embodiment.

As illustrated in FIG. 6A, execution controller 14 initializes the access rights and the execution rights (S10). For example, execution controller 14 disables all the access rights and all the execution rights. The process in Step S10 may be performed, for example, after a predetermined time has elapsed from the previous user authentication.

Next, authenticator 13 authenticates a user (first user) using an available sensor (S20). Authenticator 13 identifies a currently available sensor (here, before travel) from information indicating the relationship illustrated in FIG. 2. Here, authenticator 13 can use all of the face authentication, the fingerprint authentication, and the password authentication.

Next, when the user authentication by authenticator 13 has failed (No in S30), execution controller 14 continues the processing by proceeding back to Step S20 again. When the user authentication by authenticator 13 has succeeded (Yes in S30), execution controller 14 identifies the individual user, obtains service/function information of the service/function purchased by the user (authority information 21b) from server 20 (S40), and sets the access right and the execution right of the service/function according to the authority corresponding to the user (S50). The term "set the access right" means that information according to the authority corresponding to the user is allowed to be read, and the term "set the execution right" means that the vehicle 10 function according to the authority corresponding to the user is enabled (becomes available).

Next, the user authentication method during travel of vehicle 10 is described with reference to FIG. 6B. FIG. 6B is a flowchart illustrating the user authentication method during travel of vehicle 10 in user authentication system 1 according to the present embodiment. During travel of vehicle 10, the process illustrated in FIG. 6B is performed at least once. In the present embodiment, this process is performed multiple times. For example, the process illustrated in FIG. 6B may be performed regularly. Alternatively, if there is the possibility that a user has gotten off vehicle 10 through pressure sensor 11c, the door opening and closing sensor, or the like, this process may be performed the next time a user gets in vehicle 10.

First, distraction determiner 12 obtains a user (second user) state and a vehicle 10 state from the sensor (S110). Distraction determiner 12 obtains, from an image captured by camera 11a, as the state of the user, information indicating whether the user state is a state in which the authentication is allowed, e.g., whether the user is operating a device or the like, or whether the user is checking the circumstances around vehicle 10. Distraction determiner 12 also obtains, from the speed sensor or the like, as the state of vehicle 10, whether the current vehicle 10 is in the traveling state, in the temporarily stopped state, or in the engine stopped state. The vehicle 10 state is information indicating how much attention the user needs to pay to travel of vehicle 10. The vehicle 10 state may further include states in which the user has to especially pay attention to travel, such as a speed during travel, a passing state, and a parking state.

Next, based on at least one of the user state or the vehicle 10 state obtained, distraction determiner 12 determines whether driver distraction occurs due to the authentication operation (S120). For example, when the vehicle 10 state is a state in which a user has to especially pay attention, distraction determiner 12 may determine that driver distraction occurs. Alternatively, when the user is operating a device or the like, distraction determiner 12 may determine that driver distraction occurs. Distraction determiner 12 may make the determination in Step S120 using a table in which whether driver distraction occurs is associated with at least one of the user state or the vehicle 10 state. This table is stored in storage 16 in advance.

Next, when distraction determiner 12 determines that driver distraction does not occur (No in S120), authenticator 13 authenticates the user using the available sensor (see FIG. 2) (S130), and further determines whether the same user authentication has succeeded (S140). In Step S140, it is determined whether the current user is the same person as the user authenticated before travel. For example, in Step S140, the current user is authenticated and identified, and whether the identified user is the same person as the user before travel is determined. The term "the same user authentication has succeeded" means that the users are determined to be the same, and the term "the same user authentication has failed" means that the users are determined not to be the same. It is to be noted that the term "driver distraction does not occur" includes not only that no driver distraction occurs but also that acceptable driver distraction occurs.

FIG. 7A is a diagram schematically illustrating a case where a user at a second time point is the same person as a user at a first time point. FIG. 7A illustrates an example in which user A at the second time point is the same person as user A at the first time point. FIG. 7B is a diagram schematically illustrating a case where a user at a second time point is not the same person as a user at a first time point. FIG. 7B illustrates an example in which user D at the second time point is not the same person as user A at the first time point.

As illustrated in FIG. 7A, when user A is also in the vehicle at the second time point (e.g., user A is in the vehicle as a driver), the authentication succeeds in Step S140. In contrast, as illustrated in FIG. 7B, when user D different from user A is in the vehicle at the second time point (e.g., user D is in the vehicle as a driver), the authentication fails in Step S140.

Referring back to FIG. 6B again, next, when the same user authentication has succeeded (Yes in S140), authenticator 13 identifies the individual user for whom the authentication has succeeded, obtains service/function information of the service/function purchased by the user (e.g., authority information 21b) from server 20 (S150), and based on the obtained service/function information, continues the access right and the execution right according to the authority corresponding to the user (S160). In other words, when the user authenticated before travel and the currently authenticated user are the same, the available service/function does not change. Accordingly, authenticator 13 continues the access right and the execution right set in Step S50 of FIG. 6A.

It is to be noted that Step S150 may be omitted. However, user's authority information may be updated between now and before travel, and thus Step S150 may be performed in terms of reflecting the update.

It is to be noted that when distraction determiner 12 determines that driver distraction occurs (Yes in S120), authenticator 13 continues the processing by proceeding back to Step S110.

Moreover, when the same user authentication has failed (No in S140), i.e., when the current user is different from the user before travel, authenticator 13 extracts the access right and the execution right permitted by the past authentication (S170). For example, authenticator 13 may extract the most recently permitted access right and execution right. Moreover, for example, authenticator 13 may extract the access right and the execution right according to the service/function that has been purchased by the user before travel and has not been purchased by the current user.

Next, safety determiner 15 determines SFOP of the access right and the execution right extracted by authenticator 13 (S180). Safety determiner 15 performs the determination in Step S180 based on the extracted access right and execution right and the table illustrated in FIG. 3. When the most recently permitted access right and execution right are based on the service/function purchased by user A (as illustrated in FIG. 4, a user who has subscribed to the autonomous driving service/function), safety determiner 15 determines that the SFOP category of the autonomous driving function is "Safety". When user A has subscribed to multiple services/functions, the SFOP category is determined for each of the services/functions.

Next, safety determiner 15 determines whether the access right (or the execution right) related to "Safety" exists in the determination results in Step S180 (S190). Safety determiner 15 determines whether the most recently authenticated user has subscribed to the service/function classified into the SFOP category of "Safety". The determination in Step S190 is an example of determining whether the function enabled in Step S50 of FIG. 6A is a function related to safety during travel of vehicle 10.

Next, when the access right (or the execution right) related to "Safety" exists, i.e., when the access right (or the execution right) related to "Safety" is included in the extracted access rights and execution rights (Yes in S190), safety determiner 15 obtains the user state and the vehicle 10 state from the sensor (S200), and determines, based on the obtained information from the sensor, whether the safety is decreased by stopping access (S210). The user is different between now and before travel, and thus a stop of the service/function purchased by the user authenticated before travel is needed. However, when the service/function is suddenly stopped during travel of vehicle 10, safety during travel of vehicle 10 may be affected. Accordingly, safety determiner 15 performs the determination in Step S210. In other words, in Step S210, safety determiner 15 determines whether the safety decreases when the service/function enabled due to the previous successful authentication is stopped. For example, in the case where the service/function is the autonomous driving function, safety during travel of vehicle 10 decreases when the autonomous driving function is stopped during travel.

Safety determiner 15 determines, based on the current vehicle 10 state and the table illustrated in FIG. 3, whether the safety is decreased by stopping access. For example, when the service/function is the autonomous driving function and when the vehicle 10 state is the traveling state or the temporarily stopped state, safety determiner 15 determines that the safety decreases since a stop of this function is not allowed, and when the service/function is the autonomous driving function and when the vehicle 10 state is the engine stopped state, safety determiner 15 determines that the safety does not decrease since a stop of this function is allowed. Moreover, for example, when the service/function is ETC (toll payment) and when the vehicle 10 state is the traveling state, safety determiner 15 determines that the safety decreases since a stop of this function is not allowed, and when the service/function is ETC (toll payment) and when the vehicle 10 state is the temporarily stopped state or the engine stopped state, safety determiner 15 determines that the safety does not decrease since a stop of this function is allowed.

When safety determiner 15 determines that the safety is decreased by stopping access (Yes in S210), execution controller 14 continues the service/function corresponding to the user authenticated before travel. Although this service/function is not purchased by the currently authenticated user, execution controller 14 does not stop and continues this service/function in terms of placing emphasis on the safety of vehicle 10.

When it is determined that the safety decreases (e.g., when the function is determined to be related to the safety), as the process regarding restriction as described above, execution controller 14 may stop the enabled function after the vehicle 10 state changes to a safe state in which the enabled function can be stopped safely. Moreover, when it is determined that the safety decreases (e.g., when the function is determined to be related to the safety), as the process regarding restriction as described above, execution controller 14 may forcibly move vehicle 10 (e.g., cause vehicle 10 to autonomously travel) to a location where the enabled function can be stopped safely, and stop the enabled function after vehicle 10 moves to the location. For example, the location may be a location where the engine can be stopped.

Moreover, when safety determiner 15 determines that the access right (or the execution right) related to "Safety" is not included (No in S190) or when it is determined that the safety is not decreased by stopping access (No in S210), execution controller 14 stops the access right and the execution right (S220). Execution controller 14 stops the access right and the execution right without stopping vehicle 10 (e.g., stopping the engine). Execution controller 14 may immediately stop the access right and the execution right.

It is to be noted that vehicle 10 includes audio output device such as a loudspeaker or a display device, and authenticator 13 may inform a user in vehicle 10 of the authentication result (e.g., the result of determining whether the same user authentication has succeeded). For example, this informing may be performed at a time when the driver distraction rarely occurs. Distraction determiner 12 determines whether the driver distraction rarely occurs (e.g., whether to be less than or equal to a predetermined degree) based on at least one of the user state or the vehicle 10 state. When distraction determiner 12 determines that the driver distraction rarely occurs (or no driver distraction occurs), authenticator 13 may perform the informing. The state in which it is determined that the driver distraction rarely occurs is, for example, a state in which the authentication operation does not disturb driving, such as a temporarily stopped state due to wait at a red light.

After performing Step S160 or S220, or after being determined as Yes in Step S210, Step S110 is performed again after a predetermined time has elapsed.

### [Other Embodiments]

As described above, the user authentication method or the like according to one or more aspects is described based on the embodiment, but the present disclosure is not limited to this embodiment. Various modifications to the embodiment that can be conceived by those skilled in the art, and forms configured by combining constituent components in different embodiments without departing from the spirit of the present disclosure may be included in the scope of the present disclosure.

For example, the above embodiment takes, as an example of the first time point, a time point before travel of the vehicle, but the first time point may be during travel of the vehicle and earlier than the second time point.

Moreover, in the above embodiment, determining whether to be an access right related to "Safety" (S190) as shown in FIG. 6B does not need to be performed. After Step S180, Step S20 may be performed.

Moreover, the above embodiment takes, as an example of vehicle 10, a vehicle that uses fossil fuel such as gasoline as an energy source and travels using an engine, but vehicle 10 may be an electric vehicle or the like that uses electricity as an energy source and travels using an electric motor. In the case where vehicle 10 is an electric vehicle, the "engine stopped" as described above may be replaced with "ignition power off".

Moreover, in the above embodiment, each constituent component may be configured by an exclusive hardware product, or may be implemented by executing a software program suitable for each constituent component. Each constituent component may be implemented by means of a program executing unit, such as a CPU or a processor, reading and executing the software program recorded on a recording medium such as a hard disk or a semiconductor memory.

Moreover, the processing order of steps in each flowchart is used to specifically describe the present disclosure, and thus such steps may be executed in a different order. Also, some of the steps may be executed simultaneously (in parallel) with other steps, or may not be executed.

Moreover, the division of the functional blocks in the block diagrams is an example, and thus a plurality of functional blocks may be implemented as a single functional block, a single functional block may be divided into a plurality of blocks, or some functions may be moved to another functional block. Also, the functions of a plurality of functional blocks having similar functions may be processed by single hardware or software in parallel or in a time-shared manner.

Moreover, the user authentication system according to the above embodiment may be implemented as a single device, or may be implemented by a plurality of devices. If the user authentication system is implemented by a plurality of devices, the constituent components included in the user authentication system may be distributed to the plurality of devices in any manner. If the user authentication system is implemented by a plurality of devices, communication established between the devices is not limited in particular. It may be wired communication or wireless communication. Moreover, wireless communication and wired communication may be combined between the devices.

Moreover, the above embodiment is described as cyber security measures for a vehicle (e.g., a car), but the applicable scope of the present disclosure is not limited to this. For example, the present disclosure may be applied to mobility such as construction machines, farm machines, ships, trains, and aircrafts, as well as cars.

Moreover, each constituent component described in the above embodiment may be implemented as a software, or typically implemented as a large-scale integration (LSI) which is an integrated circuit. These may be integrated into separate chips, or some or all of them may be integrated into a single chip. A "LSI" is used here, however, it may also be referred to as an IC, a system LSI, a super LSI, or an ultra LSI in accordance with the degree of integration. Moreover, the integration may be implemented, not only as a LSI, but also as a dedicated circuit (a general circuit for executing a dedicated program) or a general purpose processor. Field Programmable Gate Array (FPGA) that can be programmed after manufacturing a LSI or reconfigurable processor that can re-configure the connection and setting of the circuit sells inside the LSI may be used. Furthermore, when integration circuit technology replacing LSI emerges with the advancement of semiconductor technology or other derivative technology, the technology may be used naturally for integrating constituent components.

The system LSI is a super multi-function LSI that is manufactured by integrating multiple processing units into one chip, and is specifically a computer system configured by including a microprocessor, a read only memory (ROM), a random access memory (RAM), and so on. The ROM stores a computer program. The system LSI accomplishes its functions through the operation of the microprocessor in accordance with the computer program.

Moreover, an aspect of the present disclosure may be a computer program that causes a computer to execute each distinctive step included in the user authentication method illustrated in any of FIG. 5 to FIG. 6B.

Moreover, for example, the program may be a program for causing a computer to execute the steps. Moreover, an aspect of the present disclosure may be a non-transitory computer-readable recording medium storing such a program. For example, such a program may be recorded on the recording medium and distributed or provided. For example, the distributed program is installed on a device including another processor and the another processor executes the distributed program, thereby it is possible to cause the device to perform each process as described above.

### [Industrial Applicability]

The present disclosure is useful for a user authentication system for use in vehicles or the like.

### [Reference Signs List]

- 1: user authentication system
- 10: vehicle
- 11a: camera
- 11b: fingerprint authentication sensor
- 11c: pressure sensor
- 12: distraction determiner
- 13: authenticator (determiner)
- 14: execution controller (first controller, second controller)
- 15: safety determiner
- 16, 21: storage
- 16a: SFOP classification information
- 16b: user information
- 16c: charging-related information
- 17a: navigation system
- 17b: autonomous driving system
- 17c: device connector
- 20: server
- 21a: authentication information
- 21b: authority information

## Claims

1. A user authentication method of authenticating a user in a vehicle, the user authentication method comprising:
authenticating a first user in the vehicle at a first time point;
enabling a function of the vehicle according to the first user authenticated;
determining whether a second user in the vehicle at a second time point is a same person as the first user, the second time point being after the first time point and during travel of the vehicle; and
performing a process regarding restriction of the function enabled, according to a result of the determining of whether the second user is the same person as the first user.

2. The user authentication method according to claim 1, wherein
when the result indicates that the second user is not the same person as the first user, the process regarding the restriction includes stopping the function enabled.

3. The user authentication method according to claim 2, wherein
when the result indicates that the second user is not the same person as the first user, the process regarding the restriction further includes:
determining whether the function enabled is a function related to safety during travel of the vehicle; and
stopping the function enabled, when the function enabled is determined not to be a function related to the safety.

4. The user authentication method according to claim 3, wherein
when the function enabled is determined to be a function related to the safety, the process regarding the restriction includes stopping the function enabled, after a state of the vehicle changes to a safe state in which the function enabled can be stopped safely.

5. The user authentication method according to claim 4, wherein
the state of the vehicle includes a traveling state, a temporarily stopped state, and an engine stopped state, and
the safe state is the engine stopped state.

6. The user authentication method according to claim 3, wherein
when the function enabled is determined to be a function related to the safety, the process regarding the restriction includes: forcibly moving the vehicle to a location where the function enabled can be stopped safely; and stopping the function enabled, after the vehicle moves to the location.

7. The user authentication method according to any one of claims 1 to 6, further comprising:
determining a state of the vehicle at the first time point, and determining an authentication method for the user at the first time point according to a result of the determining of the state of the vehicle at the first time point; and
determining a state of the vehicle at the second time point, and determining an authentication method for the user at the second time point according to a result of the determining of the state of the vehicle at the second time point.

8. The user authentication method according to claim 7, wherein
the first time point is after the first user gets in the vehicle and before the vehicle travels,
at the first time point, the user is authenticated using an input-based authentication method that receives an input from the first user, or a contactless authentication method that uses a sensing result of the first user, and
at the second time point, the user is authenticated using the contactless authentication method between the input-based authentication method and the contactless authentication method.

9. The user authentication method according to any one of claims 1 to 6, wherein
the determining of whether the second user is the same person as the first user is performed multiple times during travel of the vehicle.

10. A user authentication system that authenticates a user in a vehicle, the user authentication system comprising:
an authenticator that authenticates a first user in the vehicle at a first time point;
a first controller that enables a function of the vehicle according to the first user authenticated;
a determiner that determines whether a second user in the vehicle at a second time point is a same person as the first user, the second time point being after the first time point and during travel of the vehicle; and
a second controller that performs a process regarding restriction of the function enabled, according to a result of the determining of whether the second user is the same person as the first user.
